# EUROPEAN PATENT APPLICATION

(11) **EP 4 067 081 A1**
(43) Date of publication of application: **05.10.2022**
(21) Application number: 22164327.3
(22) Date of filing: 25.03.2022
(51) Int. Cl.: B33Y 40/20, B29C 64/30, B29C 64/10, B33Y 10/00, B33Y 80/00, D06P 5/24

(54) **3D PRINTING PROCESS APPLIED TO A SUBSTRATE, IN PARTICULAR A FABRIC**

(30) Priority: 02.04.2021 IT 202100008393
(71) Applicant: Bond Factory S.r.l., 66100 Chieti (CH) (IT)
(72) Inventor: DI RIENZO, Loreto, 66100 Chieti (CH) (IT)
(74) Representative: Locatelli, Massimo

(57) **Abstract**

Process for the realization of 3D-works (12), such as writings, decorations, functional elements or other similar objects by 3D printing, applied to a substrate (11), in particular a fabric, comprising the steps of:
- providing a 3D printer with a printing support (14) consisting of a film of bi-adhesive polymeric glue;
- carrying out a 3D printing, applying a plurality of successive layers of 3D printing material on an adhesive surface of said bi-adhesive polymeric glue film (14) until obtaining a 3D-work (12) with a visible surface (12a) and an adhesive face (12b), consisting of the opposite adhesive surface of the bi-adhesive polymeric glue film (14);
- removing the 3D-work (12) from the 3D printer;
- trimming any excess (15) of the bi-adhesive polymeric glue film (14) with respect to the outline of the 3D-work (12);
- inserting the 3D-work (12) into a hot press, with the substrate (11) adhering to its adhesive face (12b);
- heat-sealing the 3D-work (12) to the substrate (11).

## Description

The present invention relates to a process for the realization of writings, decorations, functional elements or other similar objects by 3D printing applied to a substrate, in particular a fabric.

Over the years, 3D printing technologies have been increasingly developed for the realization of various objects without the need to resort to the traditional moulding of thermoplastic materials.

The general concept behind 3D printing technologies is the so-called additive manufacturing, i.e., the application, by means of a 3D printer, of a succession of layers of suitable material, sized according to a digital 3D model, until the finished three-dimensional work is obtained.

Today, a variety of technologies are used for 3D printing, which can be broadly divided into three macro-categories depending on the state in which the material for printing is, before being used.

Stereolithography is a 3D printing process that uses a computer-controlled laser using CAM/CAD software. The pieces are realized through photopolymerization of very thin layers of liquid resin by means of a UV laser beam that is projected onto the surface of the resin to allow the transition thereof to the solid state.

"Fused Deposition Modeling" (FDM) uses an extrusion nozzle that deposits a molten polymer layer by layer to create the geometry of the piece. The polymers used can be, for example, filaments or granules of PLA (Polylactic acid) or ABS (Acrylonitrile butadiene styrene). PLA has the advantage over ABS that it does not emit potentially harmful fumes when melted and extruded. In contrast, ABS printed objects are less fragile, more resistant to high temperatures and more flexible than those printed in PLA.

The so-called "Polyjet" technology allows to print several materials together in a single layer (with a thickness equal to just a quarter of the thickness of a normal sheet of paper), even combining different colours and levels of hardness. This technology employs a jetting process whereby droplets of liquid photopolymer are nebulised from multiple nozzles onto a printing plane and then cured by UV rays in successive layers to form the finished 3D-work. It is therefore a technology that offers an excellent level of printing precision and allows for great flexibility in choosing and modifying materials and their properties.

In addition to objects to be used as they are realized, writings or various decorations on fabric, having characteristics of three-dimensionality, as well as functional elements such as buckles, buttons, etc., can also be produced by 3D printing.

However, these 3D-works realized using common 3D printing processes on fabric generally have numerous visible surface irregularities due to the irregularities inevitably present on the surface of the substrate to be decorated (i.e., the fabric).

In practice, because the fabric is never perfectly smooth, but necessarily its own weave is more or less dense, the layers of material deposited in sequence by the 3D printer tend to follow the reliefs and cavities of the weave of the substrate formed by the fabric and therefore, at these surface irregularities of the fabric, the visible surface of the printed three-dimensional work will show corresponding roughness or cavities that negatively affect the overall aesthetic appearance of the writing, decoration or functional elements thus realized.

The same drawback also occurs when 3D printing is on other substrate material, other than fabric, which still has similar surface irregularities.

In addition, the irregularities of the various layers of material deposited by the 3D printer tend to make the structure of the printed object less homogeneous overall and, consequently, to facilitate a possible breakage of the object itself and/or its detachment from the substrate on which it was realized.

The general object of the present invention is to obviate the above-mentioned drawbacks by providing a process for the realization of writings, decorations, functional elements such as buckles, buttons, etc., or other similar objects, by 3D printing, applied to a substrate, in particular a fabric, which allows obtaining 3D-works with a visible surface substantially free of defects such as roughness or cavities, regardless of the characteristics of the substrate.

A further object of the present invention is to enable the realization of 3D-works printed on such a substrate that are particularly durable and difficult to detach from the substrate itself.

In view of this purpose, it is contemplated to implement, according to the invention, a process for the realization of 3D-works, such as writings, decorations, functional elements or other similar objects by 3D printing, applied to a substrate, in particular a fabric, comprising the steps of:
- providing a 3D printer with a printing support consisting of a film of bi-adhesive polymeric glue;
- carrying out a 3D printing, applying a plurality of successive layers of 3D printing material on an adhesive surface of said bi-adhesive polymeric glue film until obtaining a 3D-work with a visible surface and an adhesive face, consisting of the opposite adhesive surface of the bi-adhesive polymeric glue film;
- removing the 3D-work from the 3D printer;
- trimming any excess of the bi-adhesive polymeric glue film with respect to the outline of the 3D-work;
- inserting the 3D-work into a hot press, with the substrate adhering to its adhesive face;
- heat-sealing the 3D-work to the substrate.

To clarify the explanation of the innovative principles of the present invention and the advantages thereof with respect to the prior art, one possible illustrative embodiment applying such principles will be described below, with the aid of the attached drawings. In the drawings:
Fig.1 represents a side elevation view of the elements that are subject to the process according to the invention, in a first operating condition assumed during the process.
Fig.2 represents an axonometric view of the components of Fig.1 in said first condition assumed during the process.
Fig.3 represents an axonometric view of said components in a subsequent condition assumed during the process.
Fig.4 represents an axonometric view of said components in a final condition assumed during the process.

With reference to the figures, there is schematically represented a substrate 11 (in particular, although not exclusively, a fabric) on which it is intended to realize, by means of a 3D printing process, a three-dimensional work 12, for example a writing, a decoration, a functional element such as buckles, buttons, etc., or similar. For the sake of clarity and simplicity, such a work 12 will be referred to and defined below as a "3D-work".

For the sake of graphic simplicity, this 3D-work is represented in the attached drawings in a completely schematic way, as a simple element in the form of a parallelepiped with a rectangular base. Obviously, it may have a more complex shape and different dimensions depending on the writing, decoration or other that is actually to be reproduced on the fabric 11.

As previously explained, a substrate such as fabric, knitwear, leather or other similar materials, normally presents more or less accentuated surface irregularities, typically due to the weave of the fabric itself or to particular processings to which it has been subjected.

For the sake of graphic simplicity, and for the purposes of explanation and understanding of the present invention, these surface irregularities have been represented in the accompanying drawings in an entirely schematic manner, as a plurality of simple grooves 13. Obviously, these irregularities can actually have very different nature, dimensions and distribution depending on the material that constitutes the substrate 11, for example intertwining of grooves oriented in different directions, cavities, reliefs, etc.

When 3D printing on the surface of such a substrate to apply a 3D-work to it, the layers of material deposited in sequence by the 3D printer inevitably tend to follow the reliefs and the cavities of the surface of the substrate, and thus, at such surface irregularities of the substrate, the visible surface of the printed three-dimensional work will exhibit corresponding roughness or cavities that adversely affect the overall aesthetic appearance of the writing or decoration thus realized. According to the invention, it is contemplated to print the 3D-work 12 on an intermediate printing substrate 14 having a smooth and regular surface, rather than directly on the fabric or substrate 11, and then proceed to fix the 3D-work on the fabric itself.

In this way, the 3D-work is printed with a satisfactorily smooth and regular visible surface 12a, regardless of the surface characteristics of the substrate 11.

The process according to the invention can be particularly advantageously associated with Polyjet and FDM printing technologies. Nevertheless, other 3D printing technologies similar to them may also be compatible with the process according to the invention.

It will now be briefly described, in its main steps, the process for the realization of 3D-works applied to a fabric or other substrate with irregular surface.

As a first step of the process according to the invention, a bi-adhesive polymeric glue film is provided, intended to constitute the printing support 14 for printing the 3D-work. The polymeric glue is preferably a thermo-adhesive polyurethan glue.

Once the bi-adhesive polymeric glue film 14 has been applied to the printing plane of the 3D printer and after the printing plane itself has been closed, the 3D printing step can begin by applying successive layers of material (liquid photopolymer nebulised droplets in the case of Polyjet printing technology, or molten polymeric granules in the case of FDM technology), which are polymerized each time in accordance with the specific printing technology used.

Specifically, the first layer of printing polymeric material laid by the 3D printer on the upper adhesive surface of the bi-adhesive polymeric glue film 14 is brought, thanks to the polymerization reaction of the material itself, to bond optimally with the polymeric glue of the printing support 14.

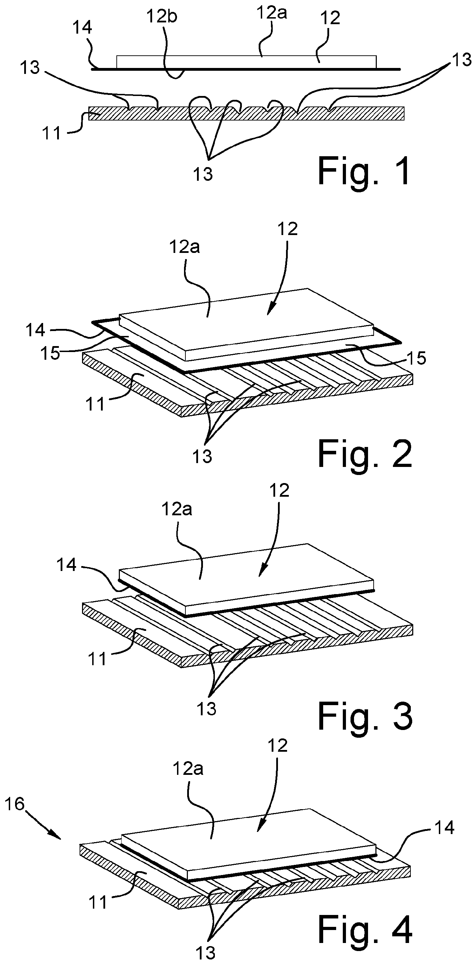

Once the 3D printing step has been completed, obtaining the work 12 with the desired dimensions and shape, the printing plane can be opened and the 3D-work removed, with the polymeric glue film 14 firmly attached to the face 12b of the work 12 intended to be subsequently joined to the substrate 11, thus in the condition shown in Figures 1 and 2.

In this condition, excess 15 of glue film 14 is normally present laterally with respect to the outline of the 3D-work.

At this point, if necessary, the 3D-work can be subjected, as the person skilled in the art knows, to cleaning operations of any printing impurities that may make its visible surfaces appear imperfect.

The next operating step of the process according to the invention provides for trimming, if present, any excess 15 of the glue film 14 with respect to the outline of the printed 3D-work, so as to obtain, as illustrated in Fig.3, a three-dimensional work having the lower face 12b (i.e., the one intended to be subsequently joined to the substrate 11) provided with polymeric adhesive glue, in particular realized by the adhesive surface of the bi-adhesive polymeric glue film 14 opposite to that on which the 3D printing was carried out.

Obviously, the above-mentioned step of cleaning any printing impurities (if necessary) could also be carried out after trimming the excess 15 of glue film, rather than before.

The final part of the process according to the invention involves joining, by means of a hot press, the 3D-work 12 to the substrate 11. To do this, the 3D-work must be properly positioned with respect to the substrate 11 to which it is to be joined.

According to a preferable operating mode, a shimmed template (having a profile corresponding to the outline of the 3D-work and a thickness equal to or less than the thickness of the work) may be used, positioned on the lower plane of the hot press, inside which the 3D-work 12 is inserted with its surface 12b provided with polymeric adhesive glue 14 facing upward (i.e., toward the upper plane of the hot press).

The function of the shimmed template is to stably support the 3D-work once the pressure of the hot press has been applied, so that it does not undergo undesirable displacements with respect to the substrate 11. Thereafter, the fabric (or other similar material) constituting the substrate 11 on which the 3D-work is to be applied is positioned on the work, in contact with the polymeric glue 14 and the hot press can be closed and operated.

Thanks to hot pressing (advantageously for a duration of 10-30 seconds, preferably 20-25 seconds, at a temperature comprised between 100°C and 200°C, preferably between 140°C and 180°C), the polymeric glue 14 liquefies, bonding closely to the substrate material 11 and then solidifying permanently. In particular, in the case of a fabric, the polymeric glue can penetrate among the fibres of the fabric itself, firmly joining the two parts.

Once the step of heat-sealing the 3D-work to the substrate 11 has been completed, the workpiece is subjected to cooling and extracted from the press.

After extraction from the hot press, the finished part 16, consisting of the substrate 11 with the 3D-work 12 applied thereto, appears as illustrated in Fig.4, that is, with the visible surface 12a of the work smooth and regular, as desired, despite the presence of irregularities 13 on the substrate 11.

It is therefore evident that the process according to the invention, for the realization of 3D-works applied to a substrate, allows to achieve the set purposes, in particular to obtain 3D-works with visible surface substantially free of defects such as roughness or cavities, regardless of the characteristics of the substrate to which they are applied.

Clearly, the above description of an embodiment applying the innovative principles of the present invention is given by way of an illustrative example of such innovative principles and must not, therefore, be taken to limit the scope of the patent claimed herein.

For example, depending on their real and effective geometric shape, the 3D-works could be positioned on the surface of the hot press even without the aid of the shimmed template, possibly adopting appropriate measures to ensure it is correctly maintained in position with respect to the substrate to which they must be applied.

However, in a manner conceptually equivalent to the foregoing, 3D printing of the work 12 could also be performed on a bi-adhesive polymeric glue film 14 applied provisionally (i.e., without yet being subjected to thermopressing) to the substrate 11. This is particularly the case in situations where it is not necessary to trim the excess of the film 14 with respect to the outline of the 3D-work (for example, because the printing support consisting of the bi-adhesive polymeric glue film 14 was supplied with a outline coinciding with that of the 3D-work to be realized), or in cases where such trimming can be carried out selectively on the film adhering to the substrate 11 without damaging the latter.

## Claims

1. Process for the realization of 3D-works (12), such as writings, decorations, functional elements or other similar objects by 3D printing, applied to a substrate (11), in particular a fabric, comprising the steps of:
- providing a 3D printer with a printing support (14) consisting of a film of bi-adhesive polymeric glue;
- carrying out a 3D printing, applying a plurality of successive layers of 3D printing material on an adhesive surface of said bi-adhesive polymeric glue film (14) until obtaining a 3D-work (12) with a visible surface (12a) and an adhesive face (12b), consisting of the opposite adhesive surface of the bi-adhesive polymeric glue film (14);
- removing the 3D-work (12) from the 3D printer;
- trimming any excess (15) of the bi-adhesive polymeric glue film (14) with respect to the outline of the 3D-work (12);
- inserting the 3D-work (12) into a hot press, with the substrate (11) adhering to its adhesive face (12b);
- heat-sealing the 3D-work (12) to the substrate (11).

2. Process for the realization of 3D-works (12) on a substrate (11) according to claim 1, **characterized in that** the polymeric glue of the bi-adhesive film (14) is a thermo-adhesive polyurethan glue.

3. Process for the realization of 3D-works (12) on a substrate (11) according to claim 1, **characterized in that** the step of heat-sealing the 3D-work (12) to the substrate (11) is carried out at a temperature between 100°C and 200°C, preferably between 140°C and 180°C, for 10-30 seconds, preferably 20-25 seconds.

4. Process for the realization of 3D-works (12) on a substrate (11) according to claim 1, **characterized in that**, at the end of the step of heat-sealing the 3D-work (12) to the substrate (11), the finished piece (16), consisting of the substrate (11) with the 3D-work (12) applied thereto, is subjected to cooling and then extracted from the press.

5. Process for the realization of 3D-works (12) on a substrate (11) according to claim 1, **characterized in that**, immediately before or immediately after the excess material trimming step (15) of the bi-adhesive polymeric glue film (14), the 3D-work (12) is subjected to cleaning of any printing impurities.

6. Process for the realization of 3D-works (12) on a substrate (11) according to claim 1, **characterized in that** the positioning of the 3D-work (12) in the hot press is carried out by means of a shimmed template, having a profile corresponding to the outline of the 3D-work and a thickness equal to or lower than the thickness of the 3D-work itself, positioned on the lower plane of the hot press, with the 3D-work (12) inserted inside the shimmed template with its adhesive face (12b) facing the upper plane of the hot press.

7. 3D-work applied to a substrate (11), in particular a fabric, obtained by the manufacturing process according to one or more of the preceding claims.
